# FASCICULE DE BREVET EUROPEEN

(11) **EP 1 222 491 B1**
(45) Date de publication et mention de la délivrance du brevet: **28.05.2003**
(21) Numéro de dépôt: 00969643.6
(22) Date de dépôt: 18.10.2000
(51) Int. Cl.: G02C 13/00

(54) **PROCEDE DE PERCAGE DE VERRES OPTIQUES ET SYSTEME POUR LA MISE EN OEUVRE D'UN TEL PROCEDE**
BOHRVERFAHREN FÜR OPTISCHE GLÄSER UND VORRICHTUNG ZUR DURCHFÜHRUNG EINES DERARTIGEN VERFAHRENS
METHOD FOR DRILLING OPTICAL GLASSES AND SYSTEM FOR CARRYING OUT A METHOD OF THIS TYPE

(30) Priorité: 20.10.1999 FR 9913314
(43) Date de publication de la demande: 17.07.2002
(73) Titulaire: Jacques Denis Export, 72005 Le Mans Cedex (FR)
(72) Inventeur: SERENNE, Franck, F-44250 Saint Brevin les Pins (FR)
(74) Mandataire: Vidon, Patrice
(86) Numéro de dépôt international: FR0002907
(87) Numéro de publication internationale: WO01029609

(56) Documents cités:
- EP-A- 0 547 895
- WO-A-94/04957
- WO-A-99/24863
- DE-A- 4 438 634
- DE-A- 19 642 171
- DE-U- 9 304 045
- GB-A- 2 141 366

## Description

L'invention concerne le domaine de l'optique et plus précisément celui de la lunetterie.

Plus précisément, l'invention se rapporte aux opérations de montage des verres sur les montures de lunettes dites « à monture percée ».

De telles montures, dans lesquelles les branches et le pont de nez sont directement fixés au verre, connaissent un succès commercial grandissant.

La réalisation de telles lunettes nécessite de percer les verres pour y fixer les branches et le pont de nez les reliant entre eux.

La fixation des branches peut ainsi nécessiter le perçage d'un, deux trous ou plus dont certains peuvent être crantés, c'est-à-dire ouvert sur un de leurs côtés.

La fixation du pont, peut également nécessiter le perçage d'un, deux trous ou plus, dont certains peuvent également être crantés.

Le nombre de formes et de tailles des verres pouvant être utilisés dans ce type de monture est très élevé. On peut par ailleurs envisager l'utilisation d'un grand nombre de modèles de branches et de pont pour être associé à ces verres.

En fonction de la forme du verre, de la forme des branches, de la forme du pont, et d'autres facteurs comme notamment la morphologie de la personne à laquelle sont destinées la paire de lunettes, les verres doivent être percés en des zones pouvant varier.

Jusqu'ici, ces zones de perçage étaient définies manuellement sur les verres.

En pratique, un type de perçage standard était utilisé pour chaque type de monture.

Toutefois, une telle pratique manuelle présente les inconvénients cumulés d'être relativement longue, pas toujours reproductible et surtout pas toujours suffisamment efficace pour permettre une bonne adéquation avec des particularités de montage pouvant notamment résulter de la morphologie de la personne portant les lunettes. Example de production de verres optiques détourés, sont décrit dans EP-A-0 547 895, DE-A-196 42 171.

L'objectif de la présente invention est de proposer un nouveau procédé de perçage de verres détourés pour la réalisation de lunettes dites « à monture percée » pouvant être mise en oeuvre avec tous types de verres, tous types de branches et tous types de pont reliant les verres entre eux.

Un objectif supplémentaire est de proposer un tel procédé qui puisse efficacement tenir compte de particularités morphologiques de la personne à qui sont destinés les lunettes.

Egalement un autre objectif de la présente invention est de proposer un tel procédé qui puisse être mis en oeuvre rapidement à distance.

Ces différents objectifs sont atteints grâce à l'invention qui concerne un procédé de perçage de verres optiques détourés selon la revendication 1 pour la réalisation de lunettes dites "à monture percée" dans lesquelles les branches et le pont sont directement fixés auxdits verres, ledit procédé étant caractérisé en ce qu'il comprend les étapes consistant à :
- définir sur ordinateur au moins un plan de perçage isostatique pour des branches,
- définir sur ordinateur au moins un plan de perçage isostatique pour l'emplacement du pont de nez,
- associer sur ordinateur lesdits plans de perçage à un gabarit virtuel donné de verre en superposant lesdits plans de perçage sur ledit gabarit ;
- mémoriser les informations concernant les plans de perçage et leur association avec ledit gabarit virtuel de verre ;
- transmettre lesdites informations à au moins une perceuse pour percer lesdits verres optiques détourés correspondant audit gabarit en fonction desdites informations.

On notera que l'on entend dans la présente description les termes "gabarit virtuel de verres", comme définissant une image correspondant à un modèle de verre détouré réel.

L'invention consiste donc à définir sur un ordinateur, grâce un logiciel adapté, des plans de perçage isostatiques (c'est-à-dire définis dans l'absolu) à associer par l'image ces plans de perçages sur un gabarit virtuel de verres, puis à transmettre ces informations s à une machine-outil constituée par une perceuse sur laquelle auront été placés les verres optiques détourés, perceuse qui percera les verres en fonction desdites informations.

Le procédé selon l'invention pourra être mis en oeuvre sur un site unique. Toutefois, selon une variante intéressante de celui-ci, lesdites étapes de définition des plans de perçage, d'association de ceux-ci à un gabarit de verre et de mémorisation des informations correspondantes sont effectués sur au moins un premier site, lesdites informations étant transmises à au moins un second site où elles sont transmises à ladite perceuse.

Une telle variante du procédé, qui consiste alors en un procédé de télé-perçage, est particulièrement intéressante.

En effet, en pratique, les étapes de définition des plans de perçage, d'association des plans de perçage au gabarit virtuel de verres, et de mémorisation des informations concernant les plans de perçage et leur association avec le gabarit pourront facilement êtres effectués par les opticiens dans leurs boutiques ("premier site"). Ces informations pourront ensuite être transmises à un site de fabrication de montures de lunettes ("second site") où elles seront exploitées pour être transmises à une perceuse sur laquelle on aura positionné les verres à percer correspondant au gabarit choisi. Un tel procédé de télé-perçage permettra d'accélérer le traitement des commandes passées par les opticiens aux fabricants, d'obtenir une meilleure adéquation entre la commande et la réalisation effective et impliquera pour l'opticien une plus grande faculté d'adapter le modèle au client .

On pourra envisager différents moyens pour définir les plans de perçage. Toutefois, selon une variante préférentielle, chaque plan de perçage est défini par rapport à un point d'origine O et inclut une ancre A, ladite ancre servant de point d'ancrage desdits plans de perçage sur ledit gabarit virtuel de verre.

Grâce à une telle encre, les plans de perçage pourront être déplacés sur le gabarit virtuel tout en restant superposés à celui-ci.

Selon le type de monture, la relation de liaison établie grâce à l'ancre 1 entre les plans de perçage et le gabarit virtuel pourront varier.

Ainsi, selon un mode de réalisation, le point d'encrage de l'ancre A sera mobile sur le bord du gabarit virtuel. On pourra ainsi déplacer le plan de perçage sur ce gabarit virtuel mais ce plan de perçage restera toujours à une distance prédéterminée du bord de celui-ci.

Dans d'autres modes de réalisation, le plan d'ancrage de l'ancre A pourra être verrouillé par rapport à l'un des axes du repère boxing du gabarit à partir du centre boxing. Il sera ainsi possible de déplacer les plans de perçage sur le gabarit virtuel mais ceux-ci resteront toujours à une distance prédéterminée du centre boxing.

On notera par ailleurs que, selon une variante préférentielle du procédé, les plans de perçage seront définis pour un seul des deux verres, les plans de perçage relatifs à l'autre verre étant automatiquement calculés par symétrie.

La définition des plans de perçage sur ordinateur pourra être effectuée de plusieurs façons.

Préférentiellement, cette définition inclut la définition d'un diamètre autour de l'origine O citée ci-dessus permettant de réaliser un premier trou dans le verre.

Avantageusement, cette définition des plans de perçage inclut de plus
- la définition des coordonnées dans un repère (O, X, Y) d'un point central correspondant à un deuxième trou ;
- la définition d'un diamètre dudit deuxième trou.

Dans de nombreux cas, le deuxième trou en question sera un trou cranté, c'est-à-dire qu'il sera ouvert sur un des bords du verre. Le plan de perçage correspondant se présentera non pas sous une forme circulaire mais sous une forme oblongue. Dans ce cas, la définition des plans de perçage inclura de plus la définition d'une longueur (L) de trou cranté.

Ce trou cranté pourra par ailleurs être plus ou moins incliné.

Dans ce cas, la définition des plans de perçage inclura de plus la définition d'un angle α d'inclinaison du trou cranté.

Selon une variante intéressante de l'invention, ledit gabarit verre est choisi dans une bibliothèque informatisée de gabarits de verres.

Également selon une variante de l'invention, ladite étape de définition des plans de perçage est effectuée à partir de plans de perçage types correspondant à des modèles de montures et stockés dans une bibliothèque informatisée de plans de perçage.

L'invention concerne également un système selon la revendication 13 pour la mise en oeuvre du procédé tel que décrit ci-dessus permettant le perçage de verres optiques détourés pour la réalisation de lunettes dites "à monture percée" dans lesquelles les branches et le pont sont directement fixés auxdits verres,
caractérisé en ce qu'il comprend :
- des moyens de calcul de plans isostatiques de perçage pour des branches et pour l'emplacement du pont nez ;
- des moyens d'association desdits plans de perçage à un gabarit virtuel donné de verre ;
- des moyens de mémorisation des informations concernant les plans de perçage et leur association avec ledit gabarit virtuel de verre ;
- des moyens de transmission desdites informations à au moins une perceuse ;
- au moins une perceuse pour percer lesdits verres détourés en fonction desdites informations.

L'invention, ainsi que les différents avantages qu'elle présente vont maintenant être plus facilement compris grâce à la description qui va suivre d'un mode non limitatif de réalisation de celle-ci donnée en référence aux figures, dans lesquelles :
- la figure 1 représente un écran relatif à un programme d'ordinateur utilisé pour la mise en oeuvre du procédé correspondant à l'étape de définition d'un plan de perçage ;
- la figure 2 représente un écran correspondant à l'association des plans de perçage sur un modèle de gabarit virtuel de verre.

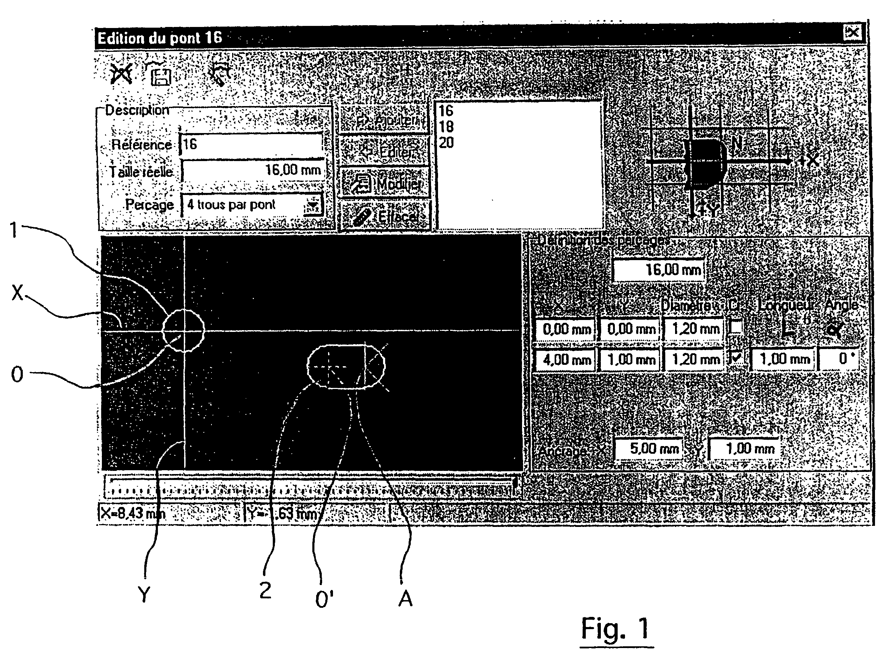

En référence à la figure 1, un plan de perçage de ponts pour la fixation d'un pont donné entre deux verres et défini par rapport à un point d'origine O.

Ce plan de perçage inclut un premier trou 1 ayant pour centre l'origine O et présentant un diamètre de 1,20 millimètres.

A partir de l'origine O l'ordinateur défini un repère orthogonal XY. Le plan de perçage inclut un deuxième trou 2 correspondant au perçage d'un trou cranté sur le verre réel. Ce deuxième trou 2 a pour référence un point O' ayant pour coordonnées dans le repère X,Y : 4 millimètres, 1 millimètre. Ce trou d'un diamètre de 1,20 millimètres est prolongé d'une longueur L de 1 millimètre pour lui donner une forme oblongue.

On notera que dans le présent mode de réalisation, le deuxième trou présentant une forme oblongue n'est pas incliné par rapport à l'axe des X, c'est-à-dire que l'angle α entre cet axe des Y et l'axe longitudinal du deuxième trou 2 est égal à 0 degré. Toutefois dans d'autres modes de réalisation correspondant à des montages différents, le deuxième trou 2 de forme oblongue pourra être incliné par rapport à l'axe des X d'un angle α plus ou moins grand.

Conformément à la présente invention, le plan de perçage inclut également une Ancre A qui, dans le présent mode de réalisation, présente des coordonnées dans le repère XY de: 5 millimètres, 1 millimètre.

Cette ancre A est, dans le cadre du présent mode de réalisation. un point d'ancrage sur le bord du verre.

Après avoir défini le plan de perçage correspondant au pont de nez, il est possible de définir de la même manière le plan de perçage isostatique correspondant à la branche.

Une fois ces deux plans de perçage définis pour un verre, l'ordinateur calcule automatique les plans de perçage symétriques pour l'autre verre.

Une fois les plans de perçage de pont et de branche définis, la suite du procédé selon la présente invention consiste à associer ces plans de perçage avec un gabarit virtuel de verres.

Ce gabarit virtuel peut être choisi parmi une bibliothèque de gabarits disponibles.

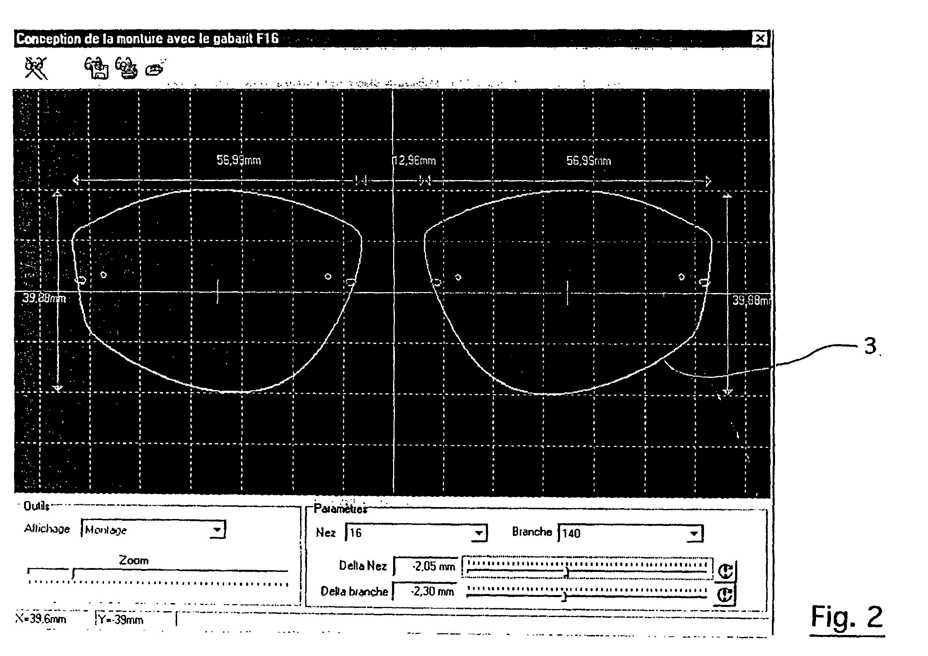

A titre d'exemple, les plans de perçage définit ci-dessus sont associé à un gabarit de verre 3 dont les côtes boxing AB figurent à l'écran montré sur la figure 2. Chacun des plans de ponts et de nez comprend deux trous. Chaque plan de perçage peut être déplacé à volonté sur le bord du gabarit virtuel de verres, de façon à pouvoir positionner à volonté la position de ces plans de perçage.

Les informations mémorisées concernant les plans de perçage et leur association avec le gabarit sont ensuite transmises à une machine-outil qui reproduit sur des verres réels les dimensions et les positions des trous définis par lesdits plans de perçage.

Le mode de réalisation ici décrit n'a pas pour objet de réduire la portée de l'invention. En conséquence, il pourrait y être apporté de nombreuses modifications sans sortir du cadre de celle-ci.

## Revendications

1. Procédé de perçage de verres optiques détourés pour la réalisation de lunettes dites "à monture percée" dans lesquelles les branches et le pont sont directement fixés auxdits verres, ledit procédé étant **caractérisé en ce qu'**il comprend les étapes consistant à :
- définir sur ordinateur au moins un plan de perçage isostatique pour des branches ;
- définir sur ordinateur au moins un plan de perçage isostatique pour l'emplacement du pont de nez ;
- associer sur ordinateur lesdits plans de perçage à un gabarit virtuel donné de verre (3) en superposant lesdits plans de perçage sur ledit gabarit ;
- mémoriser les informations concernant les plans de perçage et leur association avec ledit gabarit virtuel de verre ;
- transmettre lesdites informations à au moins une perceuse pour percer lesdits verres optiques détourés correspondant audit gabarit en fonction desdites informations.

2. Procédé selon la revendication 1 **caractérisé en ce que** lesdites étapes de définition des plans de perçage, d'association de ceux-ci à un gabarit de verre et de mémorisation des informations correspondantes sont effectuées sur au moins un premier site, lesdites informations étant transmises à au moins un second site où elles sont transmises à ladite perceuse.

3. Procédé selon la revendication 1 ou 2 **caractérisé en ce que** chaque plan de perçage est défini par rapport à un point d'origine O et inclut une ancre A, ladite ancre servant de point d'ancrage desdits plans de perçage sur ledit gabarit virtuel de verre.

4. Procédé selon la revendication 3 **caractérisé en ce que** ledit point d'ancrage est mobile sur le bord dudit gabarit virtuel de verre.

5. Procédé selon la revendication 3 **caractérisé en ce que** ledit point d'ancrage est verrouillé par rapport à l'un des axes du repère boxing du gabarit à partir du centre boxing.

6. Procédé selon l'une quelconque des revendications 1 à 5 **caractérisé en ce que** la définition des plans de perçage inclut la définition d'un diamètre autour de ladite origine O correspondant à un premier trou.

7. Procédé selon la revendication 6 **caractérisé en ce que** la définition des plans de perçage inclut de plus :
- la définition des coordonnées dans un repère (O,X,Y) d'un point central correspondant à un deuxième trou ;
- la définition d'un diamètre dudit deuxième trou.

8. Procédé selon la revendication 7 **caractérisé en ce que** ledit deuxième trou est un trou cranté, la définition des plans de perçage incluant de plus la définition d'une longueur (L) de trou cranté.

9. Procédé selon la revendication 8 **caractérisé en ce que** la définition des plans de perçage inclut de plus la définition d'un angle (α) d'inclinaison dudit trou cranté.

10. Procédé selon l'une quelconque des revendications 1 à 9 **caractérisé en ce qu'**il consiste à définir lesdits plans de perçages pour un seul des deux verres, puis à calculer par symétrie les plans de perçages relatifs à l'autre verre.

11. Procédé selon l'une quelconque des revendication 1 à 10 **caractérisé en ce que** ledit gabarit verre est choisi dans une bibliothèque informatisée de gabarits de verre.

12. Procédé selon l'une quelconque des revendications 1 à 11 **caractérisé en ce que** ladite étape de définition des plans de perçage est effectuée à partir de plans de perçage types correspondant à des modèles de montures et stockés dans une bibliothèque informatisée de plans de perçage.

13. Système pour la mise en oeuvre du procédé selon l'une des revendications 1 à 12 permettant le perçage de verres optiques détourés pour la réalisation de lunettes dites "à monture percée" dans lesquelles les branches et le pont sont directement fixés auxdits verres,
**caractérisé en ce qu'**il comprend :
- des moyens de calcul de plans isostatiques de perçage pour des branches et pour l'emplacement du pont de nez ;
- des moyens d'association desdits plans de perçage à un gabarit virtuel donné de verre (3) ;
- des moyens de mémorisation des informations concernant les plans de perçage et leur association avec ledit gabarit virtuel de verre ;
- des moyens de transmission desdites informations à au moins une perceuse ;
- au moins une perceuse pour percer lesdits verres détourés en fonction desdites informations.

## Patentansprüche

1. Verfahren zum Bohren optischer Gläser mit geschliffener Umrandung zum Zweck der Herstellung von Brillen des Typs "mit gebohrtem Rahmen", bei denen die Stiele und die Brücke direkt an den Gläsern befestigt sind, wobei das Verfahren **dadurch gekennzeichnet ist, dass** es die folgenden Schritte umfasst:
- Festlegung am Rechner von mindestens einem isostatischen Bohrplan für die Stiele;
- Festlegung am Rechner von mindestens einem isostatischen Bohrplan zum Anbringen der Nasenbrücke an dem richtigen Platz;
- Zuordnung dieses Bohrplans am Rechner zu einer gegebenen virtuellen Schablone der Gläser (3) durch Überlagerung der Schablone durch die Bohrpläne;
- Speichern der Informationen bezüglich der Bohrpläne und ihrer Zuordnung zur virtuellen Gläserschablone;
- Übertragen dieser Informationen zu mindestens einer Bohrmaschine zum Durchbohren der optischen Gläser mit geschliffener Umrandung, welche der Gläserschablone entsprechen, als Funktion der Informationen.

2. Verfahren nach Anspruch 1, **dadurch gekennzeichnet, dass** die Schritte zum Definieren der Bohrpläne, zum Zuordnen derselben zur Gläserschablone und zum Speichern der entsprechenden Informationen an mindestens einem ersten Standort erfolgen, wobei diese Informationen an mindestens einen zweiten Standort weitergeleitet werden, wo sie der Bohrmaschine zugeführt werden.

3. Verfahren nach einem der Ansprüche 1 oder 2, **dadurch gekennzeichnet, dass** jeder Bohrplan im Verhältnis zu einem Ausgangspunkt O definiert ist und einen Anker A umfasst, wobei dieser Anker der Verankerung der Bohroläne auf der virtuellen Gläserschablone dient.

4. Verfahren nach Anspruch 3, **dadurch gekennzeichnet, dass** der Verankerungspunkt auf dem Rand der virtuellen Gläserschablone beweglich ist.

5. Verfahren nach Anspruch 3, **dadurch gekennzeichnet, dass** der Verankerungspunkt gegenüber einer der Achsen des Bezugspunkts des Einschlussrechtecks (boxing) der Schablone, ausgehend vom Mittelpunkt des Einschlussrechtecks, blockiert ist.

6. Verfahren nach einem der Ansprüche 1 bis 5, **dadurch gekennzeichnet, dass** die Festlegung der Bohrpläne die Festlegung eines Durchmessers um den erwähnten Ausgangspunkt O, entsprechend einem ersten Bohrloch umfasst.

7. Verfahren nach Anspruch 6, **dadurch gekennzeichnet, dass** die Festlegung der Bohrpläne zusätzlich noch folgendes umfasst:
- Festlegung der Koordinaten innerhalb eines Bezugsystems (O,X,Y) eines Mittelpunktes, der einem zweiten Loch entspricht;
- Festlegung eines Durchmessers des erwähnten zweiten Lochs.

8. Verfahren nach Anspruch 7, **dadurch gekennzeichnet, dass** das erwähnte zweite Loch einen gezahnten Rand aufweist, wobei die Festlegung der Bohrpläne zudem die Festlegung einer Länge (L) des Loches mit gezahntem Rand umfasst.

9. Verfahren nach Anspruch 8, **dadurch gekennzeichnet, dass** die Festlegung der Bohrpläne zusätzlich die Festlegung eines Neigungswinkels (α) des Lochs mit gezahntem Rand umfasst.

10. Verfahren nach einem der Ansprüche 1 bis 9, **dadurch gekennzeichnet, dass** es im Festlegen der erwähnten Bohrpläne für nur eines der beiden Gläser besteht, gefolgt von der Berechnung der mit dem anderen Glas zusammenhängenden Bohrpläne durch Symmetrie.

11. Verfahren nach einem der Ansprüche 1 bis 10, **dadurch gekennzeichnet, dass** die erwähnte Gläserschablone aus einer EDV Gläserschablonen-Bibliothek gewählt wird.

12. Verfahren nach einem der Ansprüche 1 bis 11, **dadurch gekennzeichnet, dass** der erwähnte Festlegungsschritt für die Bohrpläne auf der Grundlage von Fassungsmodellen entsprechenden typischer Bohrpläne erfolgt und in einer EDV-Bohrplänen-Bibliothek gespeichert wird.

13. Anwendungssystem für das Verfahren nach einem der Ansprüche 1 bis 12, welches das Durchbohren optischer Gläser mit geschliffener Umrandung zum Zweck der Herstellung von Brillen des Typs "mit gebohrtem Rahmen", bei denen die Stiele und die Brücke direkt an die Gläser befestigt sind, ermöglicht,
**dadurch gekennzeichnet, dass** es folgendes umfasst:
- Mittel zum Berechnen der isostatischen Bohrpläne für die Stiele und zum Positionieren der Nasenbrücke;
- Mittel zum Zuordnen dieser Bohrpläne zu einer gegebenen virtuellen Gläserschablone (3);
- Speichermittel der Informationen bezüglich der Bohrpläne und ihrer Zuordnungen zu der erwähnten virtuellen Gläserschablone;
- Mittel zum Übertragen dieser Informationen an mindestens eine Bohrmaschine;
- mindestens eine Bohrmaschine zum Bohren der erwähnten Gläser mit geschliffenen Rändern, als Funktion dieser Informationen.

## Claims

1. Method for drilling cut optical glasses for producing so-called "drilled mount" spectacles wherein the arms and the bridge are directly attached to the said glasses, the said method being **characterized in that** it comprises steps consisting of:
- defining on a computer at least one isostatic drilling plan for the arms;
- defining on a computer at least one isostatic drilling plan for the location of the nose bridge;
- associating on a computer the said drilling plans with a given virtual glass template (3) by superimposing the said drilling plans onto the said template;
- memorising the data concerning the drilling plans and their association with the said virtual glass template;
- transmitting the said data to at least one drilling machine for the purpose of drilling the said cut optical glasses corresponding to the said template according to the said data.

2. Method according to claim 1 **characterized in that** the said steps of defining the drilling plans, associating these with a glass template and memorising the corresponding data are performed on at least one first site, the said data being transmitted to at least one second site where they are transmitted to the said drilling machine.

3. Method according to claim 1 or 2 **characterised in that** each drilling plan is defined with respect to a point of origin O and includes an anchor A, the said anchor serving as an anchorage point for the said drilling plans on the said virtual glass template.

4. Method according to claim 3 **characterized in that** the said anchorage point is movable over the edge of the said virtual glass template.

5. Method according to claim 3 **characterized in that** the said anchorage point is locked with respect to one of the boxing axes of the template from the boxing centre.

6. Method according to any one of claims 1 to 5 **characterized in that** the definition of the drilling plans includes the definition of a diameter about the said origir O corresponding to a first hole.

7. Method according to claim 6 **characterized in that** the definition of the drilling plans additionally includes:
- the definition of the coordinates in a reference (O,X,Y) of a central point corresponding to a second hole;
- the definition of a diameter of the said second hole.

8. Method according to claim 7 **characterized in that** the said second hole is a notched hole, the definition of the drilling plans additionally including the definition of a length (L) of the notched hole.

9. Method according to claim 8 **characterized in that** the definition of the drilling plans additionally includes the definition of the angle (_) of inclination of the said notched hole.

10. Method according to any one of claims 1 to 9 **characterized in that** it consists of defining the said drilling plans for one of the two glasses and then of calculating by symmetry the drilling plans relating to the other glass.

11. Method according to any one of claims 1 to 10 **characterized in that** said glass template is chosen from a computerised library of glass templates.

12. Method according to any one of claims 1 to 11 **characterized in that** said step of defining the drilling plans is performed from typical drilling plans corresponding to models of mounts and stored in a computerised library of drilling plans.

13. System for implementing the method according to one of claims 1 to 12 enabling cut optical glasses to be drilled for the purpose of producing so-called "drilled mount" spectacles wherein the arms and the bridge are directly attached to the said glasses,
**characterized in that** it comprises:
- means for calculating the isostatic drilling plans for the arms and for the location of the nose bridge;
- means for associating the said drilling plans with a given virtual glass template (3);
- means for memorising the data concerning the drilling plans and their association with the said virtual glass template;
- means for transmitting the said data to at least one drilling machine;
- at least one drilling machine for drilling the said cut glasses according to the said data.
